# EUROPÄISCHE PATENTSCHRIFT

(11) **EP 0 387 383 B1**
(45) Veröffentlichungstag und Bekanntmachung des Hinweises auf die Patenterteilung: **24.05.1995**
(21) Anmeldenummer: 89104788.8
(22) Anmeldetag: 17.03.1989
(51) Int. Cl.: G06K 7/10, G06K 19/077

(54) **Autarkes photonengetriebenes Bauelement**
Self-sufficient light-operating element
Composant autosuffisant alimenté par photogénération

(43) Veröffentlichungstag der Anmeldung: 19.09.1990
(73) Patentinhaber: SIEMENS AKTIENGESELLSCHAFT, 80333 München (DE)
(72) Erfinder: Späth, Werner, D-8150 Holzkirchen (DE); Melbert, Joachim, Dr., D-8019 Steinhöring (DE)

(56) Entgegenhaltungen:
- EP-A- 0 056 064
- DE-A- 3 047 322
- FR-A- 2 478 849
- US-A- 4 581 716
- PATENT ABSTRACTS OF JAPAN, Band 10, Nr. 89 (P-444)[2146], 8. April 1986;
- APPLIED OPTICS, Band 27, Nr. 15, 1. August 1988, Seite 3141, New York, NY, US;"Small optically driven power source"

## Beschreibung

Die Erfindung betrifft ein photonengetriebenes Bauelement.

Bei bekannten Bauelementen erfolgt die Energie und Signalübertragung mittels elektrischer Kontakte. Auch eine induktive oder Hochfrequenz-Übertragung ist bekannt. Ein Nachteil solcher bekannter Bauelemente besteht darin, daß die übertragene Information leicht mitgehört werden kann.

Bauelemente, die Energie und Signale optisch übertragen und die Merkmale der Präambel des Anspruchs 1 aufweisen, sind aus EP-A-0 056 064 bekannt.

Der vorliegenden Erfindung liegt die Aufgabe zugrunde, ein Bauelement anzugeben, das eine hohe Störsicherheit aufweist.

Diese Aufgabe wird erfindungsgemäß durch ein photonengetriebenes Bauelement nach dem Patentanspruch 1 gelöst.

Die Erfindung betrifft ein vorzugsweise monolithisches optoelektronisches Bauelement, das gleichzeitig optische Energie und optische Signale in elektrische Energie und elektrische Signale und umgekehrt elektrische Signale in optische Signale umwandeln kann und das in Verbindung mit einer elektronischen Schaltung, die auf dem gleichen Substrat in integrierter Form oder auf einem anderen Substrat in diskreter oder hybrider Form über ohmsche Verbindungen angeschlossen sein kann, eine autarke Einheit darstellt, die nach außen keine elektrischen Anschlüsse zur Energieversorgung und Signalübertragung benötigt. Die Aufgaben der Energieversorgung und Signalübertragung werden bei einem Bauelement nach der Erfindung ausschließlich von Photonenströmen in Richtung zum Bauelement hin und in Richtung vom Bauelement weg wahrgenommen.

Vorzugsweise erfolgt die Realisierung eines Bauelements nach der Erfindung in Form eines Arrays von Dioden, die in Serie und/oder parallel geschaltet und als Fotodioden ausgebildet sind und die daher in der Lage sind, optische Energie und optische Signale in elektrische Energie und elektrische Signale umzuwandeln, und einer Diode, die als Lumineszenzdiode elektrische Signale in optische Signale umwandelt.

Als lichtempfangende Halbleiter-Bauelement-Einrichtung kommt jede Einrichtung in Frage, die mit Hilfe von Halbleiter-Material in der Lage ist, optische Energie und/oder optische Signale in elektrische Energie und/oder elektrische Signale umzuwandeln. Die lichtempfangende Halbleiter-Bauelement-Einrichtung kann also auch einen Teil enthalten, der bevorzugt optische Energie in elektrische Energie umwandelt, und einen Teil umfassen, der bevorzugt optische Signale in elektrische Signale umsetzt.

Als lichtsendende Halbleiter-Bauelement-Einrichtung kommt jede Einrichtung in Frage, die mit Hilfe von Halbleitermaterial in der Lage ist, elektrische Signale in optische Signale umzuwandeln und optische Signale vom Bauelement weg abzugeben.

Als lichtempfangende Halbleiter-Bauelement-Einrichtung kommen auch Einrichtungen in Frage, die Transistoren und/oder Thyristoren umfassen.

Als elektrische Schaltung kommt jede Einrichtung in Frage, die das auf das Bauelement auftreffende Signal, das in ein elektrisches Signal umgewandelt worden ist, in irgendeiner Form verarbeiten kann und als Ergebnis dieser Verarbeitung ein elektrisches Signal an die lichtsendende Halbleiter-Bauelement-Einrichtung abgeben kann zur Umwandlung dieses von der elektrischen Schaltung abgegebenen elektrischen Signals in ein optisches Signal und zur Abgabe dieses optischen Signals vom Bauelement weg nach außen.

Als elektrische Schaltung kann eine integrierte Schaltung Verwendung finden. Beispielsweise kann mit Hilfe einer elektrischen Schaltung ein Signal, das in das autarke Bauelement eingegeben wird und das in bestimmter Weise kodiert ist, verarbeitet werden. Zu diesem Zweck ist eine integrierte elektrische Schaltung verwendbar.

Das elektrische Signal kann jedoch auch einfach nur mit Hilfe von impulsformenden Einrichtungen verarbeitet werden. Im Extremfall genügt es bereits, daß nach Abgabe eines optischen Signals in das autarke Bauelement eine ganz bestimmte Zeitverzögerung auftritt, bis das vom autarken Bauelement abzugebende optische Signal ausgegeben wird. Eine solche Signalverarbeitung kann mit Hilfe von bestimmten Verzögerungseinrichtungen erfolgen.

Ein autarkes Bauelement nach der Erfindung ist störsicher gegen statische Ladungen, gegen elektromagnetische Felder, gegen unerwünschtes Abfragen mittels elektrischem Kontaktieren oder mittels Messen der elektromagnetischen Strahlung bei induktiver Ansteuerung, gegen Verschleiß (keine elektrischen Kontakte).

Ein autarkes Bauelement nach der Erfindung findet vorteilhaft Anwendung für einen elektronischen Schlüssel, für eine Scheckkarte, für eine Telefonkarte, für Ausweise, für das Auszeichnen von Ware mit Hilfe von Nummern oder Preisen über das Auslesen an einer Kasse. Ein autarkes Bauelement nach der Erfindung findet Verwendung für eine Einrichtung zur Identifizierung von Personen oder von Gegenständen oder einer Berechtigung oder eines Preises.

Je mehr Energie in das autarke Bauelement optisch eingegeben wird, desto mehr elektrische Energie kann für den Betrieb einer elektrischen Schaltung zur Verfügung stehen. Je weniger elektrische Energie eine elektrische Schaltung benötigt, desto weniger optische Energie muß in das autarke Bauelement eingegeben werden. Das Eingeben von optischer Strahlung in das autarke Bauelement kann mit Hilfe einer einzigen Lichtquelle oder mit Hilfe von mindestens zwei Lichtquellen erfolgen. Beispielsweise kann in erster Linie mit einer Lichtquelle optische Energie eingestrahlt werden und mit einer zweiten Lichtquelle optisches Signal in das autarke Bauelement eingegeben werden. Als Halbleiter-Material für die lichtempfangende Halbleiter-Bauelement-Einrichtung und für die lichtsendende Halbleiter-Bauelement-Einrichtung kommen vorzugsweise Verbindungshalbleiter in Frage. Als Halbleiter-Material kommen daher III-V-Halbleiter wie GaP, GaAs, InP, II-VI-Halbleiter und die ternären und quaternären Halbleitersysteme, die sich mit diesen Halbleitern bilden lassen, in Frage.

Weitere Vorteile und Ausgestaltungen der Erfindung sind in den Unteransprüchen, der Beschreibung und der Zeichnung angegeben.

Die Erfindung wird näher erläutert anhand der Zeichnung.

FIG 1 erläutert das Prinzip der Erfindung.

FIG 2 und 3 erläutern elektrische Verbindungen innerhalb eines autarken Bauelements nach der Erfindung.

FIG 4 bis 10 erläutern Ausführungsmöglichkeiten für ein photonengetriebenes Bauelement.

FIG 11 bis 13 zeigen autarke photonengetriebene Bauelemente.

FIG 14 bis 17 erläutern die Verwendung eines autarken photonengetriebenen Bauelements nach der Erfindung.

FIG 18 bis 25 erläutern elektrische Schaltungen von autarken photonengetriebenen Bauelementen.

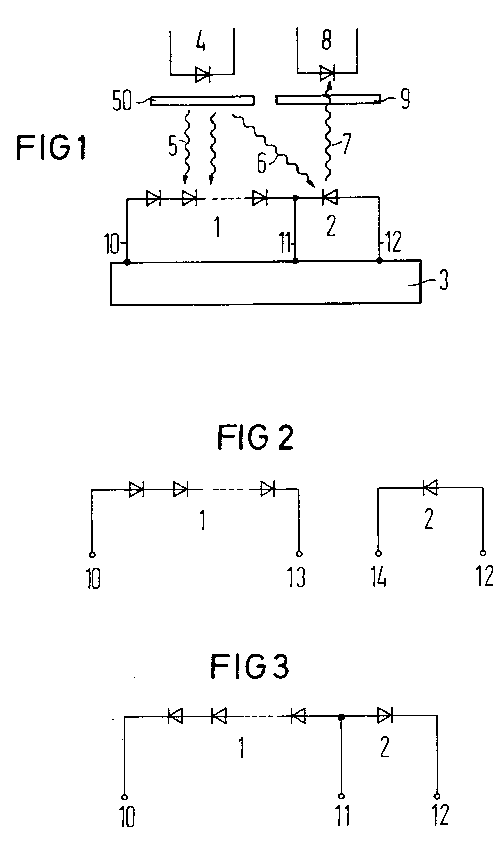

FIG 1 erläutert das Prinzip der Erfindung. Ein photonengetriebenes Bauelement umfaßt eine lichtempfangende Halbleiter-Bauelement-Einrichtung 1 zum Empfang von optischer Energie und von optischem Signal zur Umwandlung in elektrische Energie und elektrisches Signal und umfaßt eine lichtsendende Halbleiter-Bauelement-Einrichtung 2 zur Umwandlung eines elektrischen Signals in ein optisches Signal und zur Abgabe eines optischen Signals.

Ein solches photonengetriebenes Bauelement mit den beiden Einrichtungen 1 und 2 kann für sich allein hergestellt und verkauft werden und ist mit einer elektrischen Schaltung 3 elektrisch verbindbar.

Mindestens eine Lichtquelle 4 emittiert optische Strahlung 5, die mittels einer Einrichtung 50 gebündelt oder aufgeweitet werden kann. Die optische Strahlung 5 umfaßt sowohl optische Energie als auch optisches Signal. Im einfachsten Fall kann bei Verwendung eines einzigen Halbleiterlasers als Strahlungsquelle 4 die optische Energie mit einem optischen Signal moduliert werden. Daneben kann bei Verwendung zweier Quellen für optische Strahlung eine Quelle bevorzugt optische Energie und eine Quelle bevorzugt optisches Signal abgeben.

Die lichtempfangende Halbleiter-Bauelement-Einrichtung 1 kann aus einem Array von Fotodioden bestehen. Die lichtempfangende Halbleiter-Bauelement-Einrichtung 1 wandelt die optische Strahlung 5 in elektrische Energie und elektrisches Signal um. Diese elektrische Energie und dieses elektrische Signal können an den Kontakten 10, 11 der lichtempfangenden Halbleiter-Bauelement-Einrichtung 1 abgenommen werden. Mit dieser elektrischen Energie wird die elektrische Schaltung 3 betrieben. Dieses eingegangene elektrische Signal an den Kontakten 10, 11 wird von der elektrischen Schaltung 3 verarbeitet. Als Ergebnis dieser Verarbeitung wird von der elektrischen Schaltung 3 ein elektrisches Signal an den Kontakten 11, 12 der lichtsendenden Halbleiter-Bauelement-Einrichtung 2 ausgegeben. Die lichtsendende Halbleiter-Bauelement-Einrichtung 2 wandelt dieses an den Kontakten 11, 12 ausgegebene Signal in ein optisches Signal um und gibt dieses optische Signal 7 an einen Fotodetektor 8 ab. Zwischen lichtsendender Halbleiter-Bauelement-Einrichtung 2 und dem Fotodetektor 8 kann ein optisches Filter 9 angebracht sein. Dieses optische Filter 9 kann optische Störungen ausschalten. Dieses optische Filter 9 kann jedoch auch dafür sorgen, daß nur dann, wenn die optische Strahlung 7 ein bestimmtes Spektrum aufweist, das optische Signal 7 als gültiges Signal bis zum Fotodetektor 8 gelangt.

Wenn die optische Strahlung 5 ein ganz bestimmtes Spektrum aufweist, und wenn nur dann, wenn die optische Strahlung 7 ein ganz bestimmtes Spektrum aufweist, das optische Signal 7 zum Fotodetektor 8 gelangen kann, kann im Extremfall ganz auf eine elektrische Schaltung 3 verzichtet werden. Dann muß jedoch das photonengetriebene Bauelement so eingerichtet sein, daß nur bei Eingang einer bestimmten optischen Strahlung 5 mit einem ganz bestimmten Spektrum ein optisches Signal 7 mit einem ganz bestimmten Spektrum ausgegeben wird.

Die lichtsendende Halbleiter-Bauelement-Einrichtung 2 wird im Stand der Technik mit elektrischer Energie von der lichtempfangenden Halbleiter-Bauelement-Einrichtung 1 versorgt. Dies hat aber zur Folge, daß beim Senden von optischer Strahlung 7 für die elektrische Schaltung 3 dann weniger elektrische Energie zur Verfügung steht und daß dann für diesen Fall Vorsorge durch besondere Ausgestaltung der elektrischen Schaltung 3 oder der Einrichtung 1 getroffen werden muß, beispielsweise durch Verwendung von ladungsspeichernden Einrichtungen. Dies läßt sich erfindungsgemäß vermeiden, wenn auch die lichtsendende Halbleiter-Bauelement-Einrichtung 2 mit optischer Strahlung 6 von der Strahlungsquelle 4 versorgt wird. Dadurch werden in der lichtsendenden Halbleiter-Bauelement-Einrichtung 2 fotoelektrisch Ladungsträger erzeugt, die direkt zur Erzeugung der optischen Strahlung 7 benutzt werden können. Betreibt man beispielsweise die Lumineszenzdiode 2 im Leerlauf, so können die in der Lumineszenzdiode 2 fotoelektrisch erzeugten Ladungsträger nicht abfließen und die im Volumen der Lumineszenzdiode 2 fotoelektrisch erzeugten Elektron-Loch-Paare rekombinieren größtenteils strahlend. Betreibt man beispielsweise andererseits die Lumineszenzdiode 2 im Kurzschluß, so können die in der Lumineszenzdiode 2 fotoelektrisch erzeugten Elektron-Loch-Paare durch das interne elektrische Feld zu einem großen Teil getrennt werden und abfließen, so daß dann nur ein geringer Teil der Elektron-Loch-Paare rekombinieren kann. So ist beispielsweise durch wechselweises Umschalten des Betriebszustandes der Lumineszenzdiode 2 von Leerlaufbetrieb auf Kurzschlußbetrieb dieser Lumineszenzdiode 2 eine Modulation der emittierten optischen Strahlung 7 möglich. Ganz allgemein kann aber auch durch bloßes Wechseln der Abschlußimpedanz die emittierte Strahlung 7 moduliert werden. Die Größe der emittierten optischen Strahlung 7 ist dabei von der Menge der in der Lumineszenzdiode 2 fotoelektrisch erzeugten Ladungsträger, also von der Größe der im Volumen der Lumineszenzdiode 2 absorbierten optischen Strahlung 6, abhängig.

Durch geeignete Ausgestaltung der lichtsendenden Halbleiter-Bauelement-Einrichtung 2 kann eine solche Modulation des Betriebszustands dieser lichtsendenden Halbleiter-Bauelement-Einrichtung 2 nicht nur zwischen Leerlaufbetrieb und Kurzschlußbetrieb, sondern auch zwischen verschiedenen Betriebszuständen im Bereich zwischen Kurzschluß und Leerlauf erfolgen. Auf diese Weise kann die Intensität der von der lichtsendenden Halbleiter-Bauelement-Einrichtung 2 abgegebenen optischen Strahlung 7 moduliert werden. Diese Modulation der Intensität der optischen Strahlung 7 erfolgt mit Hilfe der elektrischen Schaltung 3.

Wenn das optische Filter 9 optische Strahlung 7 erst ab einer ganz bestimmten Intensität hindurchläßt, kann eine zusätzliche einfache Diskriminierung zur Analyse der Gültigkeit der optischen Strahlung 7 erzielt werden.

FIG 2 und 3 erläutern verschiedene Möglichkeiten der internen Kontaktierung innerhalb eines autarken photonengetriebenen Bauelements.

Bei FIG 2 werden für die elektrische Verbindung des photonengetriebenen Bauelements mit einer elektrischen Schaltung 3 vier elektrische Anschlüsse 10, 12, 13, 14 angeboten. Dabei besitzt die lichtempfangende Halbleiter-Bauelement-Einrichtung 1 die beiden Kontakte 10, 13 und die lichtsendende Halbleiter-Bauelement-Einrichtung 2 die beiden Kontakte 12, 14.

In FIG 3 ist die lichtempfangende Halbleiter-Bauelement-Einrichtung 1 und die lichtsendende Halbleiter-Bauelement-Einrichtung 2 in Serie geschaltet, so daß die Anoden von Foto-Array 1 und Lumineszenzdiode 2 direkt miteinander elektrisch verbunden sind. Zwischen den beiden Anoden der lichtempfangenden Halbleiter-Bauelement-Einrichtung 1 und der lichtsendenden Halbleiter-Bauelement-Einrichtung 2 wird ein elektrischer Kontakt 11 abgegriffen Damit stehen bei einem photonengetriebenen Bauelement nach FIG 3 für die elektrische Schaltung 3 drei Kontakte 10, 11, 12 zur Verfügung.

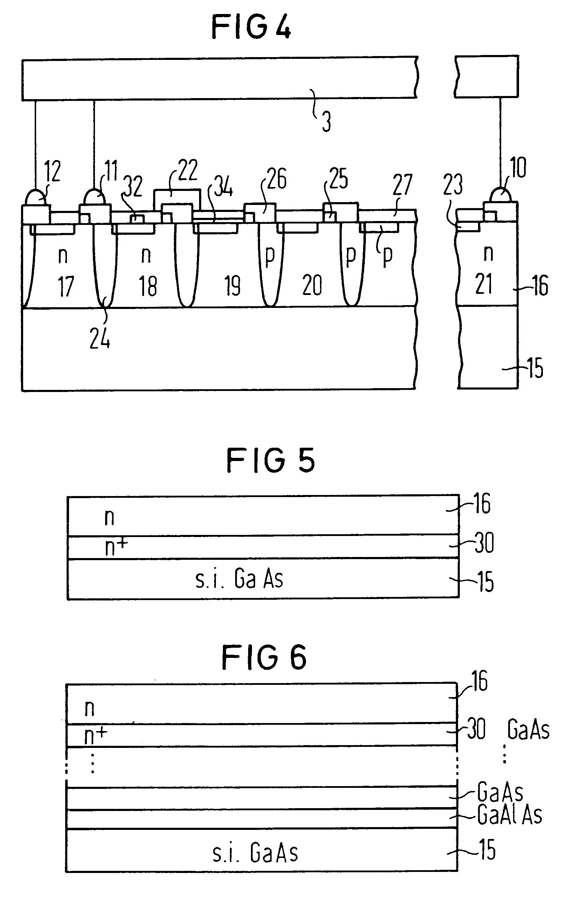

FIG 4 bis 10 erläutern Ausführungsbeispiele des photonengetriebenen Bauelements.

In FIG 4 ist auf ein semiisolierendes Galliumarsenid-Substrat 15 eine n-leitende Schicht 16 mit einer Schichtdicke im Mikrometerbereich, insbesondere mit einer Schichtdicke zwischen 1-10 Mikrometern, aufgebracht, die durch eine Trennätzung 29 oder durch eine p-Trenndiffusion 24 in einzelne Zonen aufgeteilt ist. Die einzelnen Zonen 18 bis 21 werden durch eine zusätzliche flache, zweite p-Diffusion zu Fotodioden gemacht. Durch Hintereinanderschalten dieser Fotodioden mit Hilfe von metallischen oder sonstigen (z. B. aus hochdotiertem Poly-Silizium bestehenden) Leiterrahmen 26 und mit Hilfe von optischer Abschirmung 22 der Trenndiffusion 24 gegen die einfallende optische Strahlung 5 zur Vermeidung von optischen Kurzschlüssen erhält man ein Fotoelement-Array 1, das in Abhängigkeit von der Fläche und der Anzahl der Fotodioden-Elemente und in Abhängigkeit von der Größe der Strahlungsdichte der optischen Strahlung 5 als Stromquelle bestimmter Ergiebigkeit wirkt. Eine Diode des Arrays mit der Zone 17 wird als Lumineszenzdiode 2 ausgebildet mit zwei elektrischen Anschlüssen 11, 12, wobei die Anode des Arrays 1 mit der Anode der Lumineszenzdiode 2 oder wobei die Katode des Arrays 1 und die Katode der Lumineszenzdiode 2 den gemeinsamen Kontakt 11 aufweisen.

Zur Reduzierung des Bahnwiderstands kann zwischen Substrat 15 und n-Schicht 16 eine n⁺-Schicht 30 mit einer Dotierung größer 10¹⁷cm⁻³ aufgebracht sein. Eine Reduzierung des Bahnwiderstands kann auch mit Hilfe von zusätzlichen Metallisierungen 32 auf der p-Seite der Dioden erfolgen.

Zur Erhöhung der Reflexion vom Substrat 15 her und damit zur Wirkungsgradsteigerung des photonengetriebenen Bauelements und/oder zur Reduzierung der Dicke der Schicht 16 kann zusätzlich direkt auf das Substrat 15 unterhalb der n-Schicht 16 bzw. unterhalb der n⁺-Schicht 30 ein dielektrischer Spiegel 31 aus lambda/4-Schichten aufgebracht sein. Solche lambda/4-Schichten können alternierende Schichten aus GaAs/GaAlAs oder aus GaAs/AlAs sein. Eine reflektierende Einrichtung, beispielsweise ein metallischer Spiegel oder ein dielektrischer Spiegel, kann auch unterhalb eines transparenten Substrats vorhanden sein.

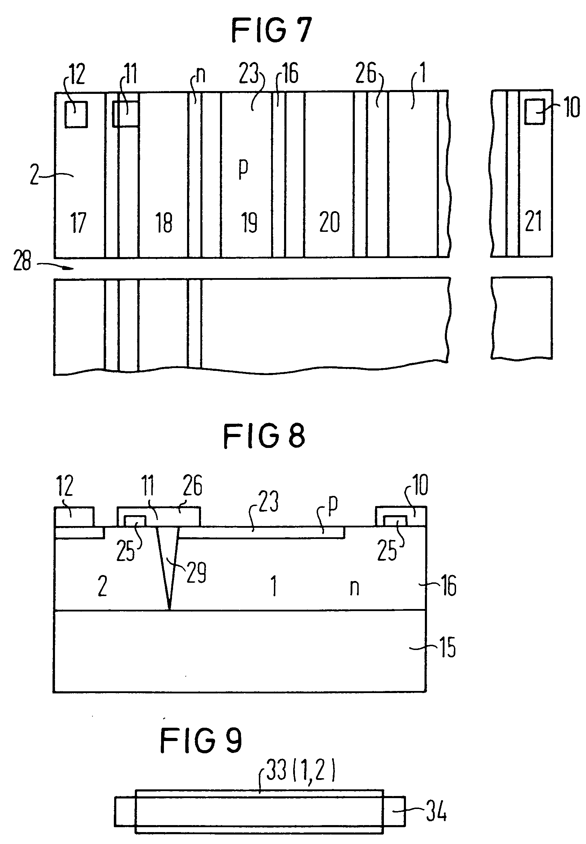

Die Schicht 16 kann eine Epitaxieschicht mit einer Dotierung zwischen 10¹⁶ und 10¹⁸cm⁻³ sein. Als Substrat 15 kann ein p-dotiertes GaAs-Substrat verwendet werden. Gemäß FIG 8 kann die Aufteilung der einzelnen Dioden 1, 2 durch einen Ätzgraben 29 bis zum Substrat 15 hin erfolgen.

In FIG 4 ist die Aufteilung der Schicht 16 in verschiedene Zonen 17 bis 21 durch Trenndiffusion 24 erfolgt. Um hier einen optischen Kurzschluß zu vermeiden, wird der Bereich oberhalb der Trenndiffusion 24 vorteilhafterweise mit einer Schicht 22 optisch abgeschirmt. Die Schicht 22 besteht vorteilhafterweise aus hochohmigem Halbleiter-Material aus Silizium oder Germanium.

Zur Erhöhung des optischen Wirkungsgrades ist auf die lichtempfindlichen Flächen der lichtempfangenden Halbleiter-Bauelemente 1 und auf die lichtsendenden Flächen der lichtsendenden Bauelemente 2 eine Vergütungsschicht 27 aufgebracht, deren Schichtdicke lambda/4 beträgt und die aus Al₂O₃ oder aus Si₃N₄ sein kann.

Zur besseren Kontaktierung an die n-Zonen der Schicht 16 ist auf diesen n-Zonen ein Gold-Germanium-Eutektikum 25 vorgesehen. Zur Kontaktierung der p-Zonen genügt eine Metallisierung 26 aus Aluminium.

Zur Reduzierung der Oberflächenrekombination kann auf die lichtempfindlichen Flächen der lichtempfangenden Bauelemente 1 und auf die lichtsendenden Flächen der lichtsendenden Bauelemente 2 eine Schicht 34 aus GaAlAs mit einer Schichtdicke von weniger als 0,1 Mikrometer aufgebracht sein.

Auf einer Halbleiterscheibe (wafer) können mehrere photonengetriebene Bauelemente gleichzeitig hergestellt werden. Die Aufteilung einer solchen Halbleiterscheibe kann in "Tortenstückform" oder linear erfolgen. Bei der Aufteilung in "Tortenstückform" besitzen die photonengetriebenen Bauelemente die Form von Kreissektoren. Bei einer solchen tortenstückförmigen Aufteilung müssen an den Rändern der aufgeteilten photonengetriebenen Bauelemente die von der Trenndiffusion 24 stammenden p-Zonen durch Abätzen entfernt werden.

FIG 7 erläutert die Aufteilung einer Halbleiterscheibe in lineare photonengetriebene Bauelemente mit Hilfe eines Sägeschnitts 28 und anschließendem Damageätzen.

Je nach Anwendung kann die eine oder andere geometrische Form des photonengetriebenen Bauelements, wie es durch Aufteilung einer Halbleiterscheibe gewonnen wird, von Vorteil sein. Es sind auch Kammstrukturen denkbar, um räumlich ungleiche Beleuchtung der Fotodioden auszugleichen.

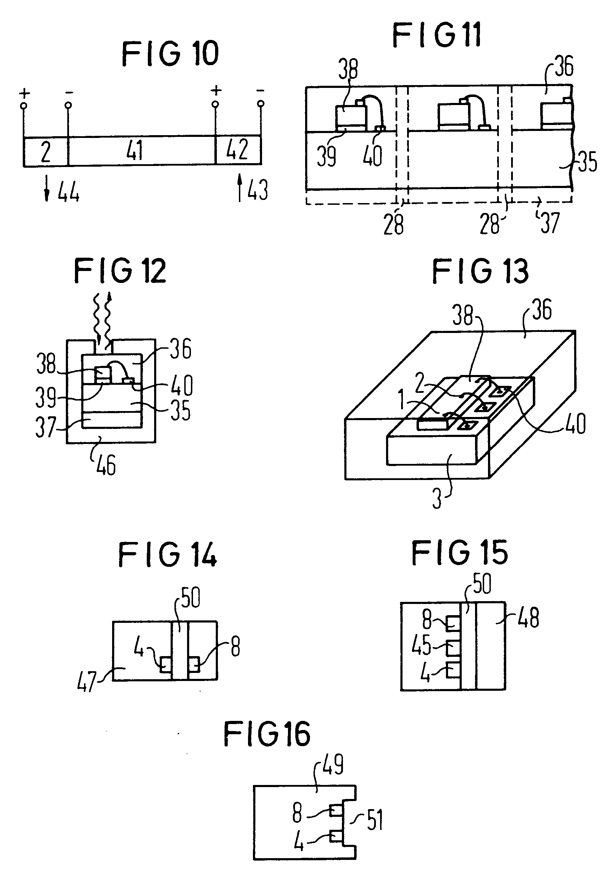

Die lineare Form ist dann von Vorteil, wenn sich die optische Strahlung 5 mit Hilfe einer Einrichtung 50 "strichförmig" bündeln (konzentrieren) läßt. Dies wird anhand von FIG 9 erläutert. FIG 9 zeigt ein räumlich längliches, lineares photonengetriebenes Bauelement 33 und einen länglich gebündelten optischen Strahl 34, der auf das Bauelement 33 auffällt. Dabei ergibt sich eine besonders hohe Ausnutzung der Strahlungsleistung. Die Bewegung des Strahls 34 in lateraler Richtung des Bauelements 33 besitzt eine hohe Toleranz. Verluste treten nur dort auf, wo in der Längsrichtung der Strahl 34 über das Bauelement 33 hinausragt. Diese optischen Verluste können minimal gehalten werden. Über die Breite des Bauelements 33 kann man relativ gut geometrische Lateraltoleranzen der optischen Anordnung abfangen. Längstolerenzen können über die Längen des Bauelements 33 und/oder des Strahles minimiert werden.

Als abbildendes Element 50 kann eine Zylinder- oder Kugellinse oder eine Kombination aus Zylinder- und Kugellinse direkt vor dem optischen Strahler 4 verwendet werden. Damit kann die optische Strahlung 5 zu einem Streifen einer Länge von 1 bis 2 mm und einer Breite von einigen Mikrometern bis zu einigen hundert Mikrometern ausgebildet werden.

FIG 10 zeigt ein photonengetriebenes Bauelement, bei dem die lichtempfangende Halbleiter-Bauelement-Einrichtung 1 einen Teil 41 und einen Teil 42 aufweist. Der Teil 41 (Array) dient dabei bevorzugt zur Umsetzung von optischer Energie in elektrische Energie. Der Teil 42 (Fotodiode) dient bevorzugt zur Umsetzung von optischem Signal in elektrisches Signal. Der Dateneingang ist mit 43 und der Datenausgang mit 44 bezeichnet.

Für die Anwendung eines photonengetriebenen Bauelements in elektronischen Schlüsseln, für eine Chipkarte, für Preisetiketten, für Kennzeichnung von Menschen, Tieren und Gegenständen usw. ist eine kompakte Aufbauweise vorteilhaft. Dies kann in der Form geschehen, daß gemäß FIG 11 das Fotoelektrische Bauelement 38 "Huckepack" auf eine integrierte Schaltung 35 gesetzt ist und mit dieser integrierten Schaltung 35 durch Drahtverbindungen über Kontakte 40 verbunden ist. Soll der Fotochip 38 auf der integrierten Schaltung 35 sehr lagegenau aufgesetzt sein, so ist von Vorteil, wenn Lotpads 39 mit genau definierter Lotdicke und geometrischen Abmessungen, die dem Fotochip 38 entsprechen, auf der integrierten Schaltung 35 aufgebracht sind. Auf diese Lotpads 39 werden die Fotochips 38 aufgesetzt und mit Hilfe eines Flußmittels fixiert. Die Halbleiterscheibe, in der die integrierten Schaltungen 35 im Verband ausgebildet worden sind, wird auf Löttemperatur gebracht. Dabei schwimmen die Fotochips 38 im flüssigen Lot in die durch die Lotpads 39 vorgegebene Lage in selbstjustierender Weise und werden in dieser Lage bei Abkühlung fixiert. Danach können die Drahtbondungen von den Fotochips 38 zu den Kontakten 40 erfolgen. Bei transparentem Substrat (Beispiel: InP) des photonengetriebenen Bauelements 38 kann die Verbindung mit der elektrischen Schaltung 3 upside-down (face-down) ohne Draht durch Direkt-Kontaktierung erfolgen. Die Halbleiterscheibe mit den integrierten Schaltungen 35 und mit den aufgelöteten und gebondeten Fotochips 38 kann auf der Vorderseite und, wenn wegen mechanischer Verspannungen vorteilhaft, auch auf der Rückseite mit einer planparallelen und für die optische Strahlung 5 (LED-bzw. Laserdioden-Strahlung) transparenten Schicht 36 z. B. aus Kunststoff abgedeckt werden. Diese beschichtete Halbleiterscheibe kann dann mit Hilfe einer üblichen Trenntechnik, z. B. durch Sägeschnitt 28, in einzelne "hybride" Chips zerteilt werden. Diese "hybriden" Chips können z. B. dann in vorgesehene Vertiefungen von Chipkarten, Preisetiketten, elektronischem Schlüssel usw. eingesetzt werden. Man spart auf diese Weise Träger und Gehäuse für das autarke Bauelement.

FIG 12 zeigt ein fertiges autarkes Bauelement. Dieses fertige autarke Bauelement besitzt auch an der Rückseite eine Schicht 37 z. B. aus Kunststoff. Das gesamte autarke Bauelement ist für den photonischen Betrieb optisch abgedichtet mit einer Schicht 46. Die Schicht 46 kann aus Selen bestehen. Die Schicht 46 kann auch optisch transparent sein.

Die FIG 14 bis 16 erläutern die Verwendung eines autarken photonengetriebenen Bauelements nach der Erfindung in Vorrichtungen 47 bis 49. Diese Vorrichtungen 47 bis 49 besitzen jeweils eine Strahlungsquelle 4 und einen Strahlungsdetektor 8. Die Vorrichtung 48 besitzt eine zusätzliche Strahlungsquelle 45. Die Vorrichtungen 47 und 48 besitzen Schlitze 50, in die eine mit einem autarken photonenbetriebenen Bauelement nach der Erfindung versehene Einrichtung eingebracht werden kann. Bei der Vorrichtung 49 kann eine mit einem autarken photonenbetriebenen Bauelement nach der Erfindung versehene Einrichtung in eine Vertiefung 51 eingelegt werden. Bei der Vorrichtung 47 sind Strahler 4 und Detektor 8 auf verschiedenen Seiten des Schlitzes 50 angeordnet.

Als Strahlungsquelle 4 nimmt man mit Vorteil einen Hochleistungs-GaAlAs-Laser mit Leistungen von einigen 10 mW bis zu einigen W im Wellenlängenbereich von 780 nm bis 870 nm. Die Eindringtiefe dieser Strahlung in GaAs ist sehr gering (einige Mikrometer), so daß man mit sehr dünnen Epitaxieschichten 16 auskommen kann. Die Dicke der Epitaxieschicht 16 kann weniger als 5 Mikrometer betragen. Daher wird wenig Fläche für die Trenndiffusion 24 benötigt, weil die dabei auftretende laterale Ausdiffusion gering ist.

Eine Hochleistungs-Laserdiode 4 kann einfach als CW-Strahlungsquelle betrieben werden, der ein moduliertes Signal aufgesetzt werden kann. Zugleich läßt sich hier ein sehr kompakter Aufbau mit einer Laserdiode in einem TO 18-, TO 5-Gehäuse realisieren. Zugleich läßt sich der optische Strahl 5 leicht mit Hilfe von Zylinderlinsen und/oder Kugellinsen auf Kreisflächen mit Durchmessern von weniger als 5 mm bis 0,1 mm und auf Streifen der Länge kleiner 2 mm und der Breite kleiner als 0,1 mm bündeln, wenn es für die Anwendung erforderlich ist. Dadurch ist es möglich, daß das autarke photonengetriebene Bauelement nach der Erfindung sehr klein und damit sehr kostengünstig ausgeführt wird. Ein photonengetriebenes Bauelement nach der Erfindung kann eine Fläche von 0,5 x 1,3 mm² mit z. B. 6 Fotodioden und einer Lumineszenzdiode bei einer Bestrahlung von 200 mW aufweisen. Damit liefert die lichtempfangende Halbleiter-Bauelement-Einrichtung 1 eine Spannung von etwa 5,5 V bei einem Strom von 6-10 mA. Die geringe spektrale Breite der Laserdiode von weniger als 5 nm läßt eine gute Trennung zwischen der Wellenlänge der Laserdiode (780-870 nm) und der Wellenlänge der Lumineszenzdiode (Peak-Wellenlänge zwischen etwa 880 und 910 nm) zu.

Ein autarkes photonengetriebenes Bauelement nach der Erfindung ist für Anwendungen geeignet, bei der eine elektrische Schaltung oder eine integrierte Schaltung mit Hilfe dieses Bauelements über Photonenströme mit Energie und Information versorgt wird und bei der die elektrische Schaltung eine Information nach außen wieder abgibt. Elektrische Schaltung 3 und Elementarray haben nach außen keine elektrische Verbindung, sind also nach außen galvanisch völlig isoliert.

Ein autarkes photonengetriebenes Bauelement nach der Erfindung kann sehr kompakt ausgebildet sein. Beispielsweise kann in FIG 11 die Dicke der Halbleiterscheibe (die Dicke der integrierten Schaltung 35) zwischen 200 und 300 Mikrometer betragen, kann die Dicke der Schicht 36 zwischen 50 und 100 Mikrometern betragen und kann die Breite eines vereinzelten autarken photonengetriebenen Bauelements zwischen 100 und 200 Mikrometern betragen.

Eine Lumineszenzdiode 2 kann auch im Zeitmultiplexbetrieb sowohl als Fotoempfänger 42 als auch als Lichtsender 2 betrieben werden. Dies bedeutet, daß zu bestimmten Zeiten die Lumineszenzdiode 2 Signale 43 annimmt und zu anderen Zeiten Signale 44 ausgibt.

Bei einem photonengetriebenen Bauelement nach der Erfindung kann als lichtsendendes Bauelement auch eine Leuchtdiode Verwendung finden, die Licht im sichtbaren Bereich abgibt. Beispielsweise kann auf einem Substrat 15 aus GaAs eine Leuchtdiode aus GaAsP integriert werden. Auch eine solche Leuchtdiode mit Strahlung im sichtbaren Bereich kann im Zeitmultiplexbetrieb sowohl als Lichtsender als auch als Lichtempfänger dienen und im Zeitmultiplexbetrieb einmal Signale 43 empfangen und einmal Signale 44 abgeben. Das von einer Leuchtdiode abgegebene Licht kann mit Hilfe eines Lichtleiters aus der Einrichtung, in der das photonengetriebene Bauelement eingebettet ist, herausgeführt werden.

Ein Gehäuse für ein autarkes photonengetriebenen Bauelement nach FIG 12 kann großtechnisch besonders günstig hergestellt werden, wenn bei einer Anordnung nach FIG 11 zunächst die Halbleiterscheibe 35 allein gesägt wird, wenn sodann die Folie 36 gedehnt wird, wenn dann die Halbleiterscheibe 35 von der Rückseite her zugegossen wird, vorteilhaft mit optisch dichtem Material, und wenn dann erst der endgültige Sägeschnitt 28 vorgenommen wird. Dabei kann das Sägeblatt schmaler als der Spalt sein. Damit wird eine sehr hohe Präzision des Sägeschnitts 28 erzielt. Dabei ist keine zusätzliche Justage in Hinblick auf das Sägen erforderlich, wenn die ursprüngliche Ordnung der Halbleiterscheibe 35 beibehalten wird. Nach der Dehnung der Folie sind auseinandergesägte Teile der Halbleiterscheibe beispielsweise 50-200 Mikrometer voneinander entfernt. Mit einem solchen Verfahren kann auf 10 Mikrometer genau gesägt werden. Man erhält auf diese Weise ein autarkes photonengetriebenes Bauelement mit sehr geringen geometrischen Toleranzen.

Das autarke photonengetriebene Bauelement mit den wesentlichen Bestandteilen 35, 38 nach FIG 12 ist beispielsweise hybrid aufgebaut. Ein autarkes photonengetriebenes Bauelement, das die Funktionen der Bestandteile 35, 38 aufweist, kann durch Integration auf einem einzigen Substrat erzeugt sein. Als solches Substrat kann ein Substrat aus einem Verbindungshalbleiter-Material verwendet werden.

FIG 13 zeigt perspektivisch ein autarkes photonengetriebenes Bauelement mit einer elektrischen Schaltung 3 und einem photonengetriebenen Bauelement 38. Das photonengetriebene Bauelement 38 besitzt die lichtempfangende Halbleiter-Bauelement-Einrichtung 1 und die lichtsendende Halbleiter-Bauelement-Einrichtung 2. Über elektrische Kontakte 39, 40 ist das photonengetriebene Bauelement 38 elektrisch mit der elektrischen Schaltung 3 verbunden. Das gesamte autarke photonengetriebene Bauelement kann mit einer transparenten Umhüllung 36 allseitig versehen sein.

Die lichtempfangende Halbleiter-Bauelement-Einrichtung 1 ist bevorzugt monolithisch ausgeführt. Bevorzugt sind diejenigen Bestandteile der Halbleiter-Bauelement-Einrichtung, die optische Energie empfangen, und diejenigen Bestandteile der Halbleiter-Bauelement-Einrichtung 1, die optisches Signal empfangen, von gleicher Material-Struktur. Bevorzugt wird optische Energie gebündelt auf die Halbleiter-Bauelement-Einrichtung 1 abgegeben, damit die Halbleiter-Bauelement-Einrichtung 1 kleinflächig ausgebildet sein kann. Diese Bündelung des optischen Strahls 5 kann bereits im optischen Strahler 4 oder mit Hilfe einer den Stahl bündelnden Einrichtung (Linse) erfolgen.

Ein Bauelement nach der Erfindung findet bevorzugt Verwendung für einen Gegenstand, der zur Identifikation irgendeines Gegenstands oder einer Person oder eines Sachverhalts oder einer Berechtigung dient. Bevorzugt findet ein Bauelement nach der Erfindung Verwendung für eine Chip-Karte, für eine Kreditkarte, für einen Personalausweis, für einen Schlüssel, generell als Identifikations- bzw. Authentifikationsinstument.

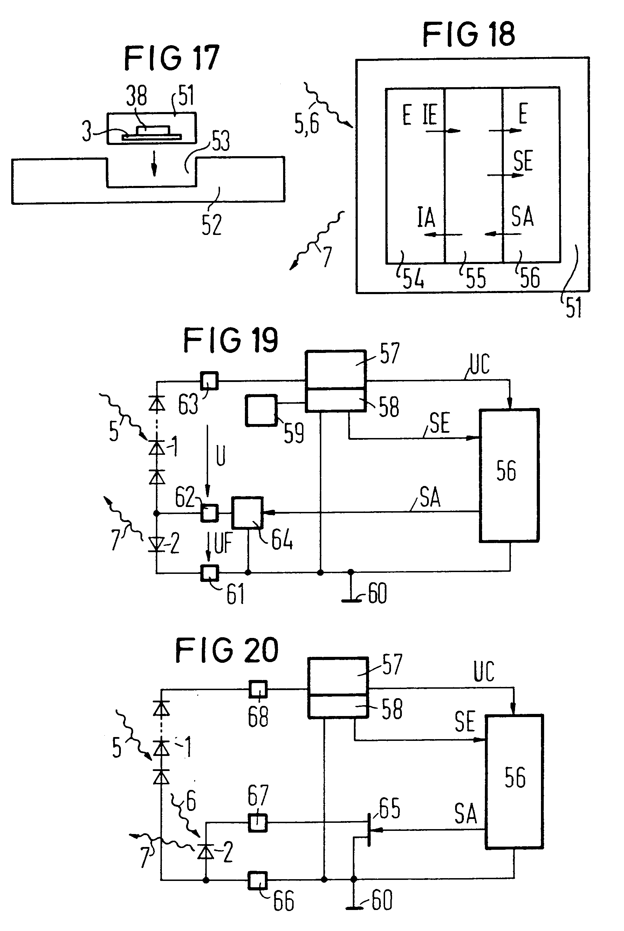

Gemäß FIG 17 kann ein autarkes photonengetriebenes Bauelement 51, wie es in FIG 13 gezeigt ist, in eine Aussparung 53 eines Trägers 52 eingebracht sein. Die Aussparung 53 kann sich über die gesamte Dicke des Trägers 52 erstrecken. Der Träger 52 kann aus Plastikmaterial sein, wie es üblicherweise für Plastik-Karten verwendet wird. Der Träger 52 kann jedoch auch aus einem Material sein, wie es üblicherweise zur Kennzeichnung von bestimmten Gegenständen, Waren usw. Verwendung findet. Ein Gegenstand 52 kann für ein Transportleitsystem, für das Sortieren von Versandartikel, Postsendungen, für Lagerhaltung oder für den Abruf von Waren aus einem Lager dienen. Ein Träger 52 kann zur Preisauszeichnung dienen.

FIG 18 zeigt ein autonomes photonengetriebenes Bauelement 51, das von außen her optische Strahlung 5, 6 empfängt und nach außen optische Strahlung 7 abgibt. Dieses autonome photonengetriebene Bauelement 51 enthält eine optoelektronische Einrichtung 54, eine Applikationsschaltung 56 und ein Interface 55 zwischen optoelektronischer Einrichtung 54 und Applikationsschaltung 56. Die optoelektronische Einrichtung 54 enthält eine lichtempfangende Halbleiter-Bauelement-Einrichtung 1 zum Empfang von optischer Energie und von optischem Signal zur Umwandlung in elektrische Energie E und elektrisches Signal IE und eine lichtsendende Halbleiter-Bauelement-Einrichtung 2 zur Umwandlung eines elektrischen Signal IA in ein optisches Signal und zur Abgabe des optischen Signals 7. Die Applikationsschaltung 56 erhält elektrische Energie E, elektrisches Signal SE und gibt elektrisches Signal SA ab. Das Interface 55 sorgt dafür, daß die Applikationsschaltung 56 mit für diese Applikationsschaltung 56 geeigneter elektrischer Energie E und geeignetem elektrischem Signal SE versorgt wird und daß die optoelektronische Einrichtung 54 mit für diese optoelektronische Einrichtung 54 geeignetem elektrischem (Ausgangs-)Signal IA versorgt wird.

Die lichtsendende Halbleiter-Bauelement-Einrichtung 2 kann die Energie, die sie zu ihrem Betrieb benötigt, von der lichtempfangenden Halbleiter-Bauelement-Einrichtung 1 oder direkt aus der optischen Strahlung 6 erhalten. Außerdem kann zusätzlich eine lichtempfangende Halbleiter-Bauelement-Einrichtung zum Empfang von optischer Energie vorgesehen sein, die nur zur Energieversorgung der lichtsendenden Halbleiter-Bauelement-Einrichtung 2 dient. Beispielsweise kann zu diesem Zweck ein Teil eines Photodioden-Arrays 1 oder ein eigenes Photodioden-Array mit zwei Photodioden-Zonen dienen.

Das von der lichtempfangenden Halbleiter-Bauelement-Einrichtung 1 empfangene optische Signal kann moduliert sein. Auch das von der lichtsendenden Halbleiter-Bauelement-Einrichtung 2 abgegebene optische Signal 7 kann moduliert sein. Eine Modulation des optischen Signals kann über eine Modulation der Amplitude, der Frequenz oder der Phase erfolgen. Empfangenes optisches Signal und gesendetes optisches Signal können in verschiedender Art moduliert sein.

Die optische Strahlung 5 enthält einen Energieanteil und einen überlagerten Signalanteil. Der überlagerte Signalanteil kann aus der optischen Strahlung 5 auf jede Art ausgefiltert werden, die dem Fachmann zur Verfügung steht.

Für die Ausgestaltung des Interface 55 insgesamt kann jede Möglichkeit verwendet werden, die einem Fachmann zur Verfügung steht, insbesondere jede Möglichkeit, die von Chipkarten oder Scheckkarten oder Telephonkarten her bekannt ist.

Im einfachsten Fall ist die einfallende optische Strahlung 5 amplitudenmoduliert. Im einfachsten Fall wiederum kann die Grundfrequenz f₀ der einfallenden optischen Strahlung 5 zur Frequenzmodulation der abgegebenen optischen Strahlung 7 verwendet werden.

FIG 19 bis 22 erläutern verschiedene Möglichkeiten für die Ausgestaltung von optoelektronischer Einrichtung 54 und Interface 55.

FIG 19 erläutert eine Ausgestaltung für die optoelektronische Einrichtung 54 und für das Interface 55 für den Fall, daß die lichtsendende Halbleiter-Bauelement-Einrichtung 2 die für ihren Betrieb erforderliche Energie aus der lichtempfangenden Halbleiter-Bauelement-Einrichtung 1 bezieht. Die lichtempfangende Halbleiter-Bauelement-Einrichtung 1 empfängt die optische Strahlung 5. Dabei bildet sich an der lichtempfangenden Halbleiter-Bauelement-Einrichtung 1 eine Spannung U aus. Mit Hilfe eines Reglers 57 und eines Diskriminators 58 erhält man aus dieser Spannung U eine Gleichspannung UC zur Spannungsversorgung der Applikationsschaltung 56 und ein elektrisches Eingangssignal SE für den Signaleingang und zur Steuerung der Applikationsschaltung 56. An den Diskriminator 58 ist ein Spannungs-Normal 59 als Spannungsreferenz angeschlossen. Je nach Art der Modulation der einfallenden Strahlung 5 kann das Spannungs-Normal 59 bei Frequenzmodulation einen Oszillator, bei Phasenmodulation eine Kombination aus Frequenz-Normal mit Speichereffekt und bei Amplituden-Modulation eine bloße vorgegebene Referenzspannung aufweisen. Das Spannungsnormal 59 kann in eine Applikationsschaltung 56 integriert sein. Bei Frequenzmodulation der einfallenden Strahlung 5 kann als Frequenz-Normal auch eine PLL-Schaltung plus Speicher dienen.

Das elektrische Eingangssignal SE für die Applikationsschaltung 56 kann als Steuersignale auch ein Takt-Signal und ein Reset-Signal enthalten.

Bei Ausbildung eines autonomen photonengetriebenen Bauelements mit Hilfe von n-Kanal-Feldeffekt-Transistoren ist das tiefste Potential die Masse 60. Zur Ausbildung von definierten Potentialen werden flächenhaft ausgebildete Pads 61 bis 63 verwendet.

Die Applikationsschaltung 56 kann auch den Regler 57 enthalten. Bei entsprechender Ausgestaltung der verwendeten optischen und elektrischen Einrichtungen kann der Regler 57 auch ganz entfallen.

Für das Senden von optischer Strahlung 7 ergibt sich bei einer Anordnung nach FIG 19 ein zusätzlicher Spannungshub UF zwischen den Pads 61 und 62 für den Regler 57 und für die Applikationsschaltung 56. Ungünstige Auswirkungen dieses Spannungshubs UF können in jeder Weise behandelt werden, die einem Fachmann zur Verfügung steht. Beispielsweise kann eine Einrichtung 64 für den Fall, daß die Einrichtung 2 gerade nicht optische Strahlung 7 abgibt, den Spannungshub UF zur Verfügung stellen. Diese Einrichtung 64 kann dann, wenn die Einrichtung 2 die optische Strahlung 7 abzugeben hat, dafür sorgen, daß diese optische Strahlung 7 mit dem elektrischen Ausgangssignal SA der Applikationsschaltung 56 moduliert wird. Es kann jedoch auch mit Hilfe von Speichereinrichtungen und von Spannungsbegrenzern dafür gesorgt werden, daß der Regler 57 und die Applikationsschaltung 56 von ungünstigen Auswirkungen des Spannungshubs UF verschont bleiben. Der Regler 57 kann gegebenenfalls sehr einfach aufgebaut sein. Am Ausgang des Reglers 57 muß eine hinreichend vom Signal befreite Versorgungsspannung für die Applikationsschaltung 56 zur Verfügung stehen. Auch der Diskriminator 58 kann sehr einfach aufgebaut sein. Am Ausgang des Diskriminators 58 muß lediglich eine elektrische Spannung SE zur Verfügung stehen, welche die Applikationsschaltung 56 als Eingangssignal verarbeiten kann und aufgrund dessen ein Ausgangssignal abgeben kann.

Als Spannungs-Normal 59 kann auch ein Kondensator für die Zwischenspeicherung des Signals dienen.

FIG 20 erläutert eine Ausführung der optoelektronischen Einrichtung 54 und des Interface 55 für den Fall, daß die für den Betrieb der Einrichtung 2 benötigte Energie vom optischen Strahler 4 in Form optischer Strahlung 6 auf die Einrichtung 2 einfällt. In den FIG 20, 21 und 22 sind Einzelheiten, die dieselbe Funktion wie in FIG 19 haben, mit denselben Bezugszeichen wie in FIG 19 bezeichnet.

Zur Definition stabiler Bezugspotential sind auch in der Anordnung nach FIG 20 Pads 66, 67, 68 verwendet. Als Modulator 65 zur Modulation der abgegebenen Strahlung 7 wird im einfachsten Fall ein elektronischer Schalter verwendet. Der elektronische Schalter 65 wird von dem von der Applikationsschaltung 56 abgegebenen Ausgangssignal SA gesteuert. Beim Senden der optischen Strahlung 7 tritt bei einer Anordnung nach FIG 20 kein zusätzlicher Spannungshub auf.

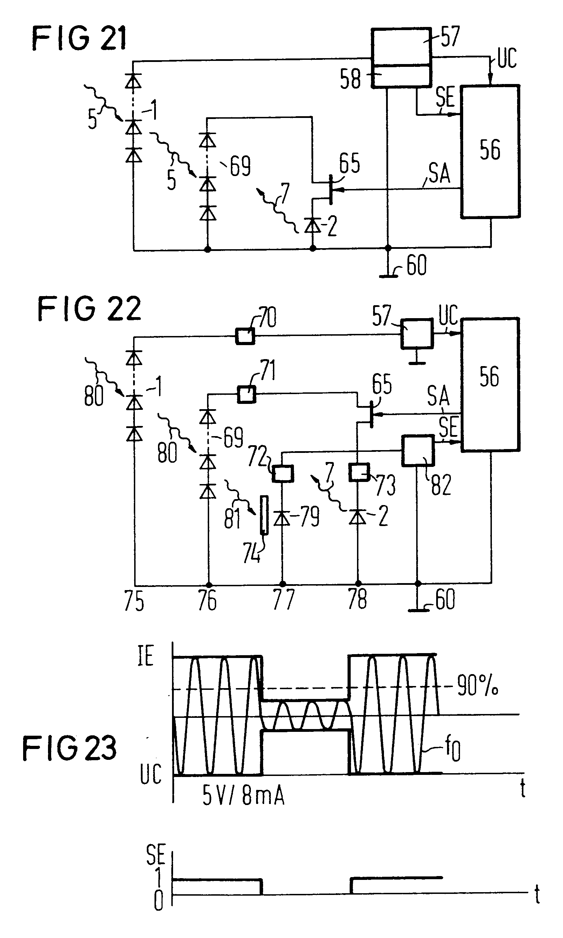

FIG 21 zeigt ein Ausführungsbeispiel für eine optoelektronische Einrichtung 54 und ein Interface 55, bei dem eine eigene lichtempfangende Halbleiter-Bauelement-Einrichtung 69 vorhanden ist, um die für die Abgabe der optischen Strahlung 7 erforderliche Energie zur Verfügung zu stellen. Dabei werden von der Einrichtung 69 sowohl die Einrichtung 2 als auch die Einrichtung 65, die zur Modulation der optischen Strahlung 7 dient, mit Energie versorgt. Die Einrichtung 69 erhält ihre Energie aus der optischen Strahlung 5. Die Einrichtung 69 kann als Teil der lichtempfangenden Halbleiter-Bauelement-Einrichtung 1 ausgebildet sein. Die Einrichtung 69 kann jedoch auch ein eigenes Photodioden-Array sein.

FIG 22 erläutert eine Konfiguration für ein autonomes photonengetriebenes Bauelement 51, bei der übersichtlich die Energieversorgung 75 für die Applikationsschaltung 56, die Energieversorgung 76 für den Sender 2, die Versorgung 77 mit Information für den Empfänger 79 und die Informationsabgabe 78 vom Sender 2 dargestellt sind.

Zur Definition stabiler Bezugspotentiale sind wiederum Pads 70 bis 73 verwendet.

Die optische Strahlung 5 kann ein Frequenzspektrum 80 zur Abgabe von Energie an die Einrichtungen 1, 69 und ein Frequenzspektrum 81 zur Abgabe von Information (Signal) an den optischen Empfänger 79 enthalten. Der optische Empfänger 79 kann eine eigene getrennte Photodiode sein. Damit der Empfänger 79 nicht vom Spektrum 80 geschaltet werden kann, wird ein optisches Filter 74 verwendet, welches dafür sorgt, daß der Empfänger 79 nur vom Spektrum 81 geschaltet wird. Das vom Empfänger 79 abgegebene elektrische Signal wird in einer Einrichtung 82 in ein elektrisches Signal umgewandelt, das die Applikationsschaltung 56 als Eingangssignal SE verarbeiten kann. Die Einrichtung 82 kann einen Vorverstärker und einen Diskriminator umfassen.

FIG 23 bis 25 erläutern das Prinzip der Demodulation der optischen Strahlung 5.

FIG 23 zeigt das am Ausgang der Einrichtung 1 auftretende elektrische Signal IE. Dieses Signal IE sei amplitudenmoduliert. Dieses Signal IE weist eine Grundfrequenz f₀ auf.

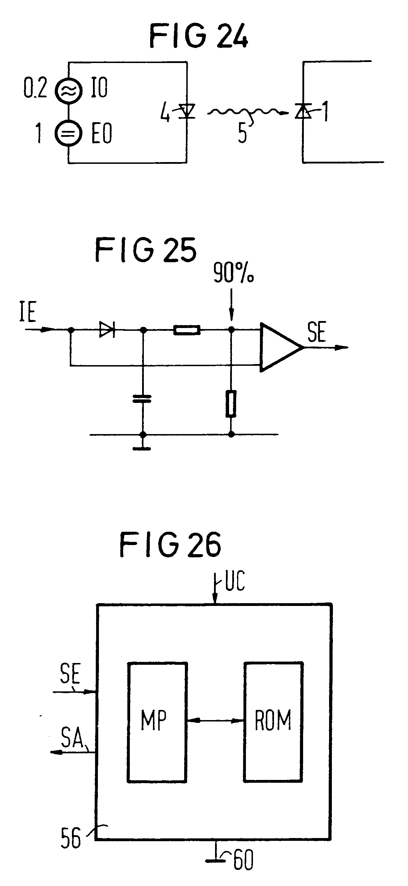

Ein in FIG 23 gezeigtes Ausgangssignal IE der Einrichtung 1 ergibt sich beispielsweise, wenn eine Einrichtung nach FIG 24 benutzt worden ist. Dabei wird der optische Strahler 4 mit einer Spannung versorgt, die sich durch eine Überlagerung von 100 % Gleichspannung EO mit 20 % Signalspannung IO ergibt. Diese überlagerten Spannungen führen zur Abgabe der optischen Strahlung 5 an die Einrichtung 1.

FIG 25 erläutert im Prinzip eine Schaltung für einen Diskriminator 58. Dabei erfährt die am Ausgang der Einrichtung 1 auftretende elektrische Spannung eine Spitzenwertbildung mit Hilfe eines Kondensators, sodann wird der Eingangs-Pegel auf 90 % der maximalen Amplitude der am Ausgang der Einrichtung 1 auftretenden Spannung herabgesetzt. Ist das am Ausgang der Einrichtung 1 auftretende Signal größer als dieser neue Pegel von 90 %, dann erhält am Ausgang einer Vergleichsschaltung das elektrische Eingangssignal SE für die Applikationsschaltung 56 einen ersten Pegel, ist das Signal am Ausgang der Einrichtung 1 kleiner als dieser 90 %-Pegel, dann erhält am Ausgang der Vergleichsschaltung das elektrische Eingangssignal SE für die Applikationsschaltung 56 den anderen Pegel eines digitalen Eingangssignals SE. Der Regler 57 gibt an die Applikationsschaltung 56 die Gleichspannung UC von beispielsweise 5 V bei einem Strom von 8 mA ab.

Das Signal am Ausgang der Einrichtung 1 besitzt eine Frequenz f₀. Aus dieser Frequenz f₀ kann ein Signal für den Modulator 64 zur Modulation des optischen Signals 7 abgeleitet werden. Damit kann ein frequenzbestimmendes Element für die Modulation des optischen Signales 7 eingespart werden. Die Frequenz f₀ der optischen Strahlung 5 kann auch zur Ableitung eines Taktsignals für die Applikationsschaltung 56 benutzt werden.

Die elektrische Schaltung 3 kann einen Speicher besitzen zur Verarbeitung des Eingangssignals. Das Eingangssignal kann in einem Speicher unverändert oder verändert gespeichert werden. Die elektrische Schaltung 3 kann einen Mikrorechner aufweisen. Die elektrische Schaltung 3 dient zur Informationsverarbeitung. Die elektrische Schaltung 3 kann zur nichtflüchtigen Speicherung von Daten dienen.

FIG 26 zeigt eine Applikationsschaltung 56 mit einem Speicher ROM. Zusätzlich zum Speicher ROM (ROM, PROM) kann noch ein Mikroprozessor MP vorgesehen sein. Vorzugsweise findet ein nicht-flüchtiger Speicher (EPROM, E²PROM) Verwendung.

Mikroprozessor MP und Speicher E²PROM können in CMOS-Technologie ausgeführt sein.

In den Schutzrechten US-PS 4 650 981, WO 86/04705, WO 87/06375 sind Identifikationskarten beschrieben. Der Inhalt dieser Referenzen ist hiermit in diese Beschreibung incorporiert.

Der Wandelwirkungsgrad von optischer Energie in elektrische Energie ist bei Photodioden sehr hoch. Wird als Quelle für die optische Strahlung eine monochromatische Quelle verwendet, so kann bei Verwendung einer Photodiode als Empfänger der optischen Strahlung die Wellenlänge der optischen Strahlung sehr nahe an die Absorptionskante gelegt werden. Auf diese Weise kann die Differenz zwischen der Energie E_{G}, die der Bandlücke des Strahlungsempfängers entspricht, und der Energie der optischen Strahlung E_{Q} sehr klein gehalten werden. Dadurch ergibt sich ein sehr hoher Wirkungsgrad der Wandlung von optischer Energie in elektrische Energie durch den Strahlungsempfänger. Dadurch ergibt sich eine optimale Nutzung der optischen Strahlung.

Bei Verwendung eines Lasers kann die Quelle der optischen Strahlung in idealer Weise an den Lichtempfänger angepaßt werden. Bei Ausbildung des Lichtempfängers aus Verbindungs-Halbleiter-Material, z. B. aus GaAs, kann die Wellenlänge des Lasers zwischen 780 nm und 830 nm gewählt werden. Damit erhält man eine Differenz zwischen der Wellenlänge des Lasers und der Absorptionskante des Empfängers von 50 nm und weniger. Vorteilhaft ist es also, wenn zwischen der Wellenlänge der optischen Strahlung und der Absorptionskante des Lichtempfängers eine Differenz von weniger als 100 nm besteht.

Vorteilhaft ist ein photonengetriebenes Bauelement in monolithischer Ausbildung. Auf diese Weise können bei Ausbildung des photonengetriebenen Bauelements aus Verbindungs-Halbleiter-Material sowohl eine Einrichtung zum Senden von optischem Signal als auch eine Einrichtung zum Empfangen von optischer Energie und optischem Signal monolithisch integriert sein. Auf diese Weise erhält man ein photonengetriebenes Bauelement, das mit hoher Leistung und bei hoher Frequenz sowohl senden als auch empfangen kann. Als optischer Strahler 4 wird dabei vorteilhaft ein Leistungslaser verwendet.

Die bei verschiedenen Ausführungsbeispielen vorgesehenen optischen Filter können auch auf dem Halbleiter-Material integriert sein. Dafür eignen sich dielektrische Filter, die aus alternierenden Schichtenfolgen von dielektrischen Materialien zusammengesetzt sind. Solche Filter sind beispielsweise in DE-OS 26 37 616 beschrieben.

Bei einem photonengetriebenen Bauelement können unerwünschte Lumineszenz-Effekte dadurch kleingehalten werden, daß möglichst viel Oberfläche vorhanden ist, bei der die fotoelektrisch erzeugten Ladungsträger im Kurzschlußbetrieb durch das elektrische Feld eines pn-Überganges oder eines Schottky-Uberganges oder eines anderen elektrischen Feldes getrennt werden. Dies kann durch eine geeignete Struktur des Bauelements erzielt werden. Beispielsweise kann der pn-Übergang (23-16) in FIG 4 möglichst nahe an der Oberfläche sein, kann eine möglichst hohe Lebensdauer der Ladungsträger ermöglichen und kann parallel zur Oberfläche des Bauelements eine möglichst große Fläche einnehmen (u. U. Kontaktieren der Schicht 16 von unten her), damit im Kurzschlußbetrieb die Ladungsträger möglichst rasch die p- bzw. n-Zonen erreichen können und möglichst wenig strahlend rekombinieren. Auch durch eine geeignete Anordnung von Kontakten können die photonengetriebenen Ladungsträger zusatzlich gesteuert werden. Dadurch kann verhindert werden, daß in Folge von unerwünschten Lumineszenz-Effekten Störsignale auftreten. Wenn die lichtsendende Einrichtung des photonengetriebenen Bauelements im Kurzschluß betrieben wird, soll möglichst wenig Lumineszenz auftreten.

## Patentansprüche

1. Photonengetriebenes Bauelement mit einer lichtempfangenden monolithischen Halbleiter-Bauelement-Einrichtung (1) zum Empfang von optischer Energie und von optischem Signal zur Umwandlung in elektrische Energie und elektrisches Signal, mit einer lichtsendenden Halbleiter-Bauelement-Einrichtung (2) zur Umwandlung eines elektrischen Signals in ein optisches Signal sowie zur Abgabe eines optischen Signals und mit einer Einrichtung (3) zur Modulation des von der lichtsendenden Halbleiter-Bauelement-Einrichtung (2) emittierten Lichts dadurch gekennzeichnet, daß die lichtsendende Halbleiter-Bauelement-Einrichtung zur Aufnahme von optischer Strahlung zur Umwandlung in elektrische Energie vorgesehen ist, und daß das emittierte Licht durch zeitlich abwechselnden Betrieb dieser lichtsendenden Halbleiter-Bauelement-Einrichtung (2) zwischen mindestens zwei Betriebszuständen im Bereich zwischen Leerlauf und Kurzschluß der lichtsendenden Halbleiter-Bauelement-Einrichtung (2) moduliert wird.

2. Bauelement nach Anspruche 1,
**gekennzeichnet durch** ein Array (1) von Fotodioden, die seriell und/oder parallel geschaltet sind, als Bestandteil der lichtempfangenden Halbleiter-Bauelement-Einrichtung.

3. Bauelement nach einem der Ansprüche 1 und 2,
**gekennzeichnet durch** eine Lumineszenzdiode (2) als Bestandteil der lichtsendenden Halbleiter-Bauelement-Einrichtung.

4. Bauelement nach einem der Ansprüche 1 bis 3,
**gekennzeichnet durch** elektrischen Anschluß der Katode der lichtempfangenden Halbleiter-Bauelement-Einrichtung (1) an die Katode der lichtsendenden Halbleiter-Bauelement-Einrichtung (2) oder der Anode der lichtempfangenden Halbleiter-Bauelement-Einrichtung (1) an die Anode der lichtsendenden Halbleiter-Bauelement-Einrichtung (2).

5. Bauelement nach einem der Ansprüche 1 bis 4,
**gekennzeichnet durch** drei elektrische Anschlüsse (10, 11, 12) insgesamt von lichtempfangender Halbleiter-Bauelement-Einrichtung (1) und lichtsendender Halbleiter-Bauelement-Einrichtung (2) an eine elektrische Schaltung (3).

6. Bauelement nach einem der Ansprüche 1 bis 5,
**gekennzeichnet durch** ein gemeinsames Substrat (15).

7. Bauelement nach Anspruch 6,
**gekennzeichnet durch** ein semiisolierendes Substrat (15).

8. Bauelement nach einem der Ansprüche 1 bis 7,
**gekennzeichnet durch** einen Aufbau der lichtempfangenden Halbleiter-Bauelement-Einrichtung (1) und der lichtsendenden Halbleiter-Bauelement-Einrichtung (2) aus Verbindungs-Halbleiter-Material (16).

9. Bauelement nach einem der Ansprüche 1 bis 8,
**gekennzeichnet durch** einen Aufbau der lichtempfangenden Halbleiter-Bauelement-Einrichtung (1) und der lichtsendenden Halbleiter-Bauelement-Einrichtung (2) aus wenigstens einer Schicht (16) aus Halbleiter-Material.

10. Bauelement nach Anspruch 9,
**gekennzeichnet durch** eine Aufteilung der Schicht (16) in Zonen (17-21) durch Trenndiffusion mit optischer Abschirmung (22).

11. Bauelement nach Anspruch 9 oder 10,
**gekennzeichnet durch** Aufteilung der Schicht (16) in Zonen durch Grabenätzung (29).

12. Bauelement nach einem der Ansprüche 6 bis 11,
**gekennzeichnet durch** eine Einrichtung (30, 32) zur Reduzierung des Bahnwiderstands.

13. Bauelement nach einem der Ansprüche 6 bis 12,
**gekennzeichnet durch** eine reflektierende Einrichtung (31) der vom einfallenden Licht abgewandten Seite der lichtempfangenden Halbleiter-Bauelement-Einrichtung (1).

14. Bauelement nach einem der Ansprüche 1 bis 13,
**gekennzeichnet durch** eine räumlich längliche Ausbildung (33).

15. Bauelement nach einem der Ansprüche 1 bis 14,
**gekennzeichnet durch** eine optische Vergütung (27).

16. Bauelement nach einem der Ansprüche 1 bis 15,
**gekennzeichnet durch** eine Schicht (34) zur Reduzierung der Oberflächenrekombination.

17. Bauelement nach einem der Ansprüche 1 bis 16,
**gekennzeichnet durch** eine Position auf einem weiteren Bauelement (35), das wenigstens einen Teil der Einrichtung zur Modulation (3) enthält.

18. Bauelement nach einem der Ansprüche 1 bis 17,
**gekennzeichnet durch** eine Abdeckung (36) aus Kunststoff.

19. Bauelement nach einem der Ansprüche 1 bis 18,
**gekennzeichne durch** eine teilweise optische Abdichtung (46).

20. Bauelement nach einem dem Ansprüche 1 bis 19,
**gekennzeichnet durch** Bestrahlung der lichtempfangenden Halbleiter-Bauelement-Einrichtung (1) mit einem Halbleiter-Laser (4) als Strahlungsquelle.

21. Bauelement nach Anspruch 20,
**gekennzeichnet durch** eine gebündelte Bestrahlung der lichtempfangenden Halbleiter-Bauelement-Einrichtung (1).

22. Bauelement nach einem der Ansprüche 1 bis 21,
**gekennzeichnet durch** eine Bestrahlung der lichtempfangenden Halbleiter-Bauelement-Einrichtung (1) mit wenigstens zwei Lichtquellen (4, 45).

23. Bauelement nach einem der Ansprüche 1 bis 22,
**gekennzeichnet durch** einen Teil (42) der lichtempfangenden Halbleiter-Bauelement-Einrichtung (1), von dem elektrische Signale abgenommen werden, und einen Teil (41) der lichtempfangenden Halbleiter-Bauelement-Einrichtung (1), von dem elektrische Energie abgenommen wird.

24. Bauelement nach einem der Ansprüche 1 bis 23,
**gekennzeichnet durch** eine Ausbildung der lichtempfangenden Halbleiter-Bauelement-Einrichtung (1) und der lichtsendenden Halbleiter-Bauelement-Einrichtung (2) in einem einzigen Monolithen.

25. Bauelement nach einem der Ansprüche 1 bis 24,
**gekennzeichnet durch** ein optisches Filter (74) für einen Teilbereich (79) der lichtempfangenden Halbleiter-Bauelement-Einrichtung (1) zur Trennung von optischer Energie mit einem ersten Spektrum (80) und optischem Signal mit einem zweiten Spektrum (81).

26. Bauelement nach einem der Ansprüche 1 bis 25,
**gekennzeichnet durch** einen Teilbereich der lichtempfangenden Halbleiter-Bauelement-Einrichtung (1) zur Energieversorgung der Einrichtung zur Modulation (3).

27. Bauelement nach einem der Ansprüche 1 bis 26,
**gekennzeichnet durch** eine Einrichtung (MP) zur Informationsverarbeitung.

28. Bauelement nach einem der Ansprüche 1 bis 27,
**gekennzeichnet durch** eine Einrichtung (ROM) zur Speicherung von Daten.

29. Bauelement nach Anspruch 28,
**gekennzeichnet durch** eine Einrichtung (EPROM, E²PROM) zur nicht-flüchtigen Speicherung von Daten.

30. Verwendung eines Bauelements nach einem der Ansprüche 1 bis 29 für eine Einrichtung (47, 48, 49) zur Identifizierung einer Person oder eines Gegenstandes oder einer Berechtigung oder eines Preises.

31. Verwendung eines Bauelements nach einem der Ansprüche 1 bis 29 für ein Identifikationsinstrument oder für ein Authentifikationsinstrument
oder für eine Chip-Karte
oder für eine Kreditkarte
oder für eine Scheckkarte
oder für einen Schlüssel
oder für einen Ausweis.

32. Identifikationsinstrument oder Authentifikationsinstrument oder Chip-Karte oder Kreditkarte oder Scheckkarte oder Schlüssel oder Ausweis mit einem Bauelement nach einem der Ansprüche 1 bis 29.

## Claims

1. Photon-driven component having a light-receiving monolithic semiconductor component device (1) for receiving optical energy and an optical signal for conversion into electrical energy and an electric signal, having a light-transmitting semiconductor component device (2) for converting an electric signal into an optical signal as well as for generating an optical signal, and having a device (3) for modulating the light emitted by the light-transmitting semiconductor component device (2), characterized in that the light-transmitting semiconductor component device is provided for the purpose of receiving optical radiation for conversion into electrical energy, and in that the emitted light is modulated by temporally alternating the operation of this light-transmitting semiconductor component device (2) between at least two operating states in the region between idling and short-circuiting of the light-transmitting semiconductor component device (2).

2. Component according to Claim 1, characterized by an array (1) of photodiodes, which are connected in series and/or in parallel, as a constituent of the light-receiving semiconductor component device.

3. Component according to one of Claims 1 and 2, characterized by a light-emitting diode (2) as a constituent of the light-transmitting semiconductor component device.

4. Component according to one of Claims 1 to 3, characterized by electrical connection of the cathode of the light-receiving semiconductor component device (1) to the cathode of the light-transmitting semiconductor component device (2), or of the anode of the light-receiving semiconductor component device (1) to the anode of the light-transmitting semiconductor component device (2).

5. Component according to one of Claims 1 to 4, characterized by three electrical connections (10, 11, 12) in total from the light-receiving semiconductor component device (1) and light-transmitting semiconductor component device (2) to an electric circuit (3).

6. Component according to one of Claims 1 to 5, characterized by a common substrate (15).

7. Component according to Claim 6, characterized by a semi-insulating substrate (15).

8. Component according to one of Claims 1 to 7, characterized by constructing the light-receiving semiconductor component device (1) and the light-transmitting semiconductor component device (2) from compound semiconductor material (16).

9. Component according to one of Claims 1 to 8, characterized by constructing the light-receiving semiconductor component device (1) and the light-transmitting semiconductor component device (2) from at least one layer (16) made from semiconductor material.

10. Component according to Claim 9, characterized by dividing the layer (16) into zones (17-21) by isolation diffusion with optical screening (22).

11. Component according to Claim 9 or 10, characterized by dividing the layer (16) into zones by trench etching (29).

12. Component according to one of Claims 6 to 11, characterized by a device (30, 32) for reducing the bulk resistance.

13. Component according to one of Claims 6 to 12, characterized by a reflecting device (31) on the side of the light-receiving semiconductor component device (1) which is averted from the incident light.

14. Component according to one of Claims 1 to 13, characterized by a spatially elongated design (33).

15. Component according to one of Claims 1 to 14, characterized by an optical coating (27).

16. Component according to one of Claims 1 to 15, characterized by a layer (34) for reducing the surface recombination.

17. Component according to one of Claims 1 to 16, characterized by a position on a further component (35) which contains at least a part of the device for modulation (3).

18. Component according to one of Claims 1 to 17, characterized by a covering (36) made from plastic.

19. Component according to one of Claims 1 to 18, characterized by a partial optical seal (46).

20. Component according to one of Claims 1 to 19, characterized by irradiation of the light-receiving semiconductor component device (1) with the aid of a semiconductor laser (4) as radiation source.

21. Component according to Claim 20, characterized by focused irradiation of the light-receiving semiconductor component device (1).

22. Component according to one of Claims 1 to 21, characterized by irradiation of the light-receiving semiconductor component device (1) with the aid of at least two light sources (4, 45).

23. Component according to one of Claims 1 to 22, characterized by a part (42) of the light-receiving semiconductor component device (1) from which electric signals are tapped, and a part (41) of the light-receiving semiconductor component device (1) from which electrical energy is tapped.

24. Component according to one of Claims 1 to 23, characterized by constructing the light-receiving semiconductor component device (1) and the light-transmitting semiconductor component device (2) in a single monolith.

25. Component according to one of Claims 1 to 24, characterized by an optical filter (74) for a subregion (79) of the light-receiving semiconductor component device (1) for separating optical energy with a first spectrum (80) and an optical signal with a second spectrum (81).

26. Component according to one of Claims 1 to 25, characterized by a subregion of the light-receiving semiconductor component device (1) for supplying energy to the device for modulation (3).

27. Component according to one of Claims 1 to 26, characterized by a device (MP) for information processing.

28. Component according to one of Claims 1 to 27, characterized by a device (ROM) for storing data.

29. Component according to Claim 28, characterized by a device (EPROM, EEPROM) for non-volatile storage of data.

30. Use of a component according to one of Claims 1 to 29 for a device (47, 48, 49) for identifying a person or an object or an authorization or a price.

31. Use of a component according to one of Claims 1 to 29 for an identification instrument or for an authentication instrument or for a chip card or for a credit card or for a cheque card or for a key or for an identity card.

32. Identification instrument or authentication instrument or chip card or credit card or cheque card or key or identity card having a component according to one of Claims 1 to 29.

## Revendications

1. Composant activé par des photons et comportant un dispositif monolithique à composants à semiconducteurs (1) qui reçoit la lumière, pour recevoir une énergie optique et un signal optique pour leur conversion en une énergie électrique et un signal électrique, un dispositif photoémissif à composants à semiconducteurs (2) servant à convertir un signal électrique en un signal optique et servant à délivrer un signal optique, et un dispositif (3) pour moduler la lumière émise par le dispositif photoémissif (2) à composants à semiconducteurs, caractérisé par le fait que le dispositif photoémissif à composants à semiconducteurs est destiné à recevoir un rayonnement optique pour la conversion en une énergie électrique, et que la lumière émise est modulée par le fonctionnement, alternatif dans le temps, de ce dispositif photoémissif à composants à semiconducteurs (2) entre au moins deux états de fonctionnement dans la gamme située entre le fonctionnement à vide et le court-circuit du dispositif photoémissif à composants à semiconducteurs (2).

2. Composant suivant la revendication 1, caractérisé par un réseau (1) de photodiodes qui sont branchées en série/en parallèle, en tant que constituant du dispositif à composants à semiconducteurs, qui reçoit la lumière.

3. Composant suivant l'une des revendications 1 et 2, caractérisé par une diode à luminescence (2) en tant qu'élément constitutif du dispositif photoémissif à composants à semiconducteurs.

4. Composant suivant l'une des revendications 1 à 3, caractérisé par le raccordement électrique de la cathode du dispositif (1) à composants à semiconducteurs, qui reçoit la lumière, à la cathode du dispositif photoémissif à composants à semiconducteurs (2), ou par le raccordement électrique de l'anode du dispositif à composants à semiconducteurs (1), qui reçoit la lumière, à l'anode du dispositif photoémissif à composants à semiconducteurs (2).

5. Composant suivant l'une des revendications 1 à 4, caractérisé par le raccordement électique de trois bornes (10,11,12) globalement d'un dispositif à composants à semiconducteurs (1), qui reçoit la lumière, et d'un dispositif photoémissif à composants à semiconducteurs (2) à un circuit électrique (3).

6. Composant suivant l'une des revendications 1 à 5, caractérisé par un substrat commun (15).

7. Composant suivant la revendication 6, caractérisé par un substrat isolant (15).

8. Composant suivant l'une des revendications 1 à 7, caractérisé par un agencement du dispositif à composants à semiconducteurs (1), qui reçoit la lumière, et du dispositif photoémissif à composants à semiconducteurs (2), en un matériau semiconducteur composé (16).

9. Composant suivant l'une des revendications 1 à 8, caractérisé par un agencement du dispositif à composants à semiconducteurs (1), qui reçoit la lumière, et du dispositif photoémissif à composants à semiconducteurs (2) à partir d'au moins une couche (16) en un matériau semiconducteur.

10. Composant suivant la revendication 9, caractérisé par une division de la couche (16) en zones (17-21) par diffusion de séparation avec blindage optique (22).

11. Composant suivant la revendication 9 ou 10, caractérisé par la division de la couche (16) en zones par aménagement de sillons par corrosion (29).

12. Composant suivant l'une des revendications 6 à 11, caractérisé par un dispositif (30,32) permettant de réduire la résistance de volume.

13. Composant suivant l'une des revendications 6 à 12, caractérisé par un dispositif réfléchissant (31) situé du côté, tourné à l'opposé de la lumière incidente, du dispositif à composants à semiconducteurs (1) qui reçoit la lumière.

14. Composant suivant l'une des revendications 1 à 13, caractérisé par une configuration allongée dans l'espace (33).

15. Composant suivant l'une des revendications 1 à 14, caractérisé par un traitement optique antireflet (27).

16. Composant suivant l'une des revendications 1 à 15, caractérisé par une couche (34) servant à réduire la recombinaison de surface.

17. Composant suivant l'une des revendications 1 à 16, caractérisé par une position sur un autre composant (35), qui contient au moins une partie du dispositif de modulation (3).

18. Composant suivant l'une des revendications 1 à 17, caractérisé par un revêtement (36) en matière plastique.

19. Composant suivant l'une des revendications 1 à 18, caractérisé par un dispositif d'étanchéité partiellement optique (46).

20. Composant suivant l'une des revendications 1 à 19, caractérisé par l'irradiation du dispositif à composants à semiconducteurs (1), qui reçoit la lumière, avec un laser à semiconducteurs (4) en tant que source de rayonnement.

21. Composant suivant la revendication 20, caractérisé par une irradiation focalisée du dispositif à composants à semiconducteurs (1), qui reçoit la lumière.

22. Composant suivant l'une des revendications 1 à 21, caractérisé par une irradiation du dispositif à composants à semiconducteurs (1), qui reçoit la lumière, avec au moins deux sources de lumière (4,45).

23. Composant suivant l'une des revendications 1 à 22, caractérisé par le fait que des signaux électriques sont prélevés dans une partie (42) du dispositif à composants à semiconducteurs (1), qui reçoit la lumière, et qu'une énergie électrique est prélevée d'une partie (41) du dispositif à composants à semiconducteurs (1), qui reçoit la lumière.

24. Composant suivant l'une des revendications 1 à 23, caractérisé par une réalisation du dispositif à composants à semiconducteurs (1), qui reçoit la lumière, et du dispositif photoémissif à composants à semiconducteurs (2), sous la forme d'un seul monolithe.

25. Composant suivant l'une des revendications 1 à 24, caractérisé par un filtre optique (74) pour une zone partielle (79) du dispositif à composants à semiconducteurs (1), qui reçoit la lumière, pour séparer une énergie optique ayant un premier spectre (80) et un signal optique ayant un second spectre (81).

26. Composant suivant l'une des revendications 1 à 25, caractérisé par une zone partielle du dispositif à composants à semiconducteurs (1), qui reçoit la lumière, pour l'alimentation en énergie du dispositif de modulation (3).

27. Composant suivant l'une des revendications 1 à 26, caractérisé par un dispositif (MP) pour le traitement d'informations.

28. Composant suivant l'une des revendications 1 à 27, caractérisé par un dispositif (ROM) pour la mémorisation de données.

29. Composant suivant la revendication 28, caractérisé par un dispositif (EPROM, E²PROM) pour la mémorisation non volatile de données.

30. Utilisation d'un composant suivant l'une des revendications 1 à 29 pour un dispositif (47,48,49) pour l'identification d'une personne ou d'un objet ou d'une autorisation ou d'un prix.

31. Utilisation d'un composant suivant l'une des revendications 1 à 39 pour un appareil d'identification ou pour un appareil d'authentification
ou pour une carte à puce,
ou pour une carte de crédit,
ou pour une carte-chèque,
ou pour une clé,
ou pour une carte d'identité.

32. Appareil d'identification ou appareil d'authentification ou carte à puce ou carte de crédit ou de carte-chèque ou carte d'identité comportant un composant suivant l'une des revendications 1 à 29.
